# EUROPEAN PATENT SPECIFICATION

(11) **EP 1 060 527 B1**
(45) Date of publication and mention of the grant of the patent: **30.05.2007**
(21) Application number: 98963896.0
(22) Date of filing: 14.12.1998
(51) Int. Cl.: H01M 4/26, H01M 4/42, H01M 4/50

(54) **POROUS ALKALINE ZINC/MANGANESE OXIDE BATTERY**
PORÖSE ZINK/MANGANOXIDBATTERIE
PILE POREUSE ALCALINE A OXYDE DE MANGANESE/ZINC

(30) Priority: 31.12.1997 US 2012; 03.04.1998 US 54939
(43) Date of publication of application: 20.12.2000
(73) Proprietor: DURACELL INC., Bethel, Connecticut 06801 (US)
(72) Inventor: HARRIS, Peter B., Stow, MA 01775 (US); WOODNORTH, Douglas J., Needham, MA 02194 (US); CERVERA, James, Medway, MA 06410 (US); FARISS, Gregory A., Poughkeepsie, NY 12603 (US); TAY, George I., Southbury, CT 06488 (US); BRYS, Barbara, Bedford, MA 01730 (US); HAMILTON, Terry L., Danbury, CT 06811 (US); HOWARD, Martin W., Wilton, CT 06897 (US)
(74) Representative: Ebner von Eschenbach, Jennifer
(86) International application number: PCT/US1998/026489
(87) International publication number: WO 1999/034460

(56) References cited:
- JP-A- 56 079 854
- US-A- 4 007 472
- US-A- 5 283 139
- US-A- 5 300 371
- US-A- 5 342 712
- US-A- 5 419 987
- US-A- 5 424 145
- US-A- 5 626 988
- US-A- 5 686 204
- PATENT ABSTRACTS OF JAPAN vol. 0051, no. 45 (E-074), 12 September 1981 (1981-09-12) & JP 56 079854 A (MATSUSHITA ELECTRIC IND CO LTD), 30 June 1981 (1981-06-30)

## Description

The invention relates to batteries.

Batteries, such as alkaline batteries, are commonly used as energy sources. Generally, alkaline batteries have a cathode, an anode, a separator and an electrolytic solution. The cathode is typically formed of manganese dioxide, carbon particles and a binder. The anode can be formed of a gel including zinc particles. The separator is usually disposed between the cathode and the anode. The electrolytic solution, which is dispersed throughout the battery, can be a hydroxide solution.

The invention relates to batteries, such as alkaline batteries, having porous cathodes and porous anodes. These batteries have good performance characteristics. For example, the batteries can exhibit high energy output at a high discharge rate, such as a discharge rate equal to at least the battery's capacity (in units of Ampere-hours) discharged in one hour. The batteries can have various industry standard sizes, such as AA, AAA, AAAA, C or D.

JP-A-56079854 discloses manganese dioxide-graphite cathodes for alkaline batteries having porosities between 20 and 40%. US-A-5626988 discloses zinc/manganese dioxide batteries containing gel zinc anodes with between 1.43 and 2.4 gram of zinc per cubic centimeter of gel.

The invention features an electrochemical cell that has a cathode, an anode and a separator disposed between the cathode and the anode as defined in claim 1. The cathode includes manganese dioxide, optionally with carbon particles, and the anode includes zinc particles. The cathode has a porosity of from 24% to 28%, and the anode that has a porosity of from 2.15 grams of zinc particles to 2.30 grams of zinc particles per cubic centimeter of anode volume that is taken up by solid or liquid material. The porosity of the cathode is the relative volume of the cathode that is not taken up by solid material such as, for example, manganese dioxide, carbon particles and binder.

In a preferred aspect, the cathode has a porosity of from 25 to 27% and even more preferably. The anode has a porosity of about 26%.

In a further preferred aspect, the invention features an electrochemical cell that has a cathode, an anode and a separator disposed between the cathode and the anode. The cathode includes manganese dioxide, and the anode includes zinc particles. The cathode has a porosity of from about 24% to about 26%, and the anode has a porosity of from about 2.15 grams of zinc particles to about 2.3 grams of zinc particles per cubic centimeter of anode volume.

In some embodiments, the separator includes a nonwoven, non-membrane material and a second nonwoven, non-membrane material disposed along a surface of the first material. In these embodiments, the separator can be devoid of a membrane layer or an adhesive layer disposed between the nonwoven, non-membrane materials. A membrane material refers to a material having an average pore size of less than about 0.5 micron, whereas a non-membrane material refers to a material having an average pore size of at least about 5 microns.

In certain embodiments, the cathode includes nonsynthetic, nonexpanded graphite particles having an average particle size of less than about 20 microns as measured using a Sympatec HELIOS analyzer. For a given sample of graphite particles, the average particle size is the particle size for which half the volume of the sample has a smaller particle size.

"Nonsynthetic graphite particles" refer to graphite particles that are prepared without using an industrial or laboratory graphitization process.

"Nonexpanded graphite particles" refer to graphite particles that have undergone no industrial or laboratory expansion process.

In some embodiments, the electrochemical cell can have a relatively small amount of manganese dioxide and/or zinc particles compared to the amount of electrolytic solution. For example, the weight ratio of manganese dioxide to electrolytic solution can be from about 2.2 to about 2.9, and the weight ratio of zinc particles to electrolytic solution can be from about 0.9 to about 1.25. These weight ratios are calculated based on the amount of electrolytic solution dispersed throughout the cathode, anode and separator.

The batteries can be AA or AAA batteries that demonstrate good results when tested according to the cc photo test, the 1 Watt continuous test, the half Watt continuous test, the pulsed test, the half Watt rm test and/or the quarter Watt rm test. These tests are described below.

Other features and advantages of the invention will be apparent from the description of the preferred embodiments thereof and the claims.

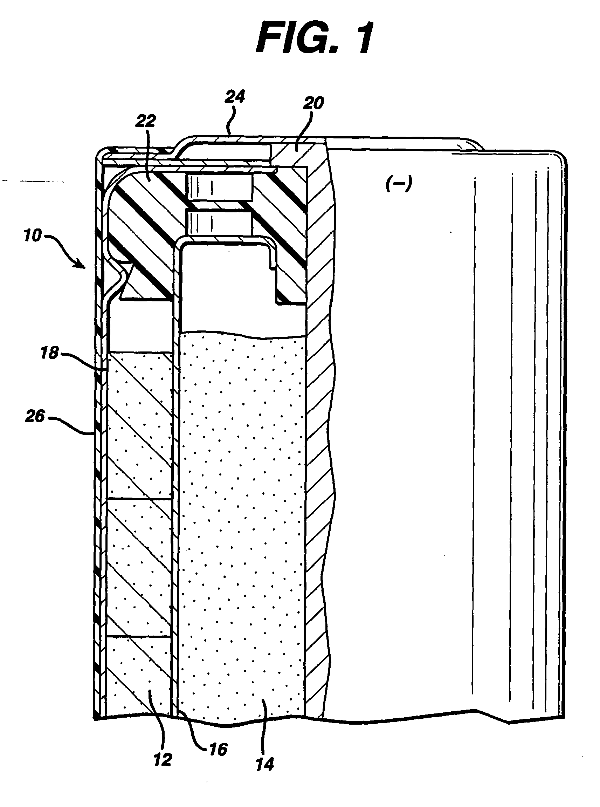

The figure is a cross-sectional view of a battery.

The preferred batteries are alkaline batteries that have a cathode that includes manganese dioxide and an anode that includes zinc particles. The cathode has a porosity of from about 21% to about 28% and the anode has a porosity of from about 2 grams of zinc particles to about 2.45 grams of zinc particles per cubic centimeter of anode volume.

Referring to the figure, a battery 10 is shown that has a cathode 12, an anode 14, a separator 16, an outer wall 18 that contacts the outer diameter of cathode 12 and insulating layer 26. Battery 10 further includes an anode collector 20 that passes through a seal member 22 and into anode 14. The upper end of anode collector 20 is connected to a negative end cap 24 which serves as the negative external terminal of battery 10. Layer 26 can be formed of an electrically nonconducting material, such as a heat shrinkable plastic. In addition, an electrolytic solution is dispersed throughout battery 10.

Cathode 12 can be formed of any of the standard materials used in battery cathodes. Typically, cathode 12 is formed of manganese dioxide, carbon particles and optionally a binder.

In some embodiments, cathode 12 can be a single pellet of material. Alternatively, cathode 12 can be formed of a number of cathode pellets that are stacked on top of each other. In-either case, the cathode pellets can be made by first mixing the manganese dioxide, carbon particles and optionally a binder. For embodiments in which more than one pellet is used, the mixture can be pressed to form the pellets. The pellet(s) are fit within battery 10 using standard processes. For example, in one process, a core rod is placed in the central cavity of battery 10, and a punch is then used to pressurize the top most pellet. When using this process, the interior of wall 18 can have one or more vertical ridges that are spaced circumferentially around wall 18. These ridges can assist in holding cathode 12 in place within battery 10.

In embodiments in which cathode 12 is formed of a single pellet, the powder can be placed directly within battery 10. A retaining ring can be set in place, and an extrusion rod can pass through the ring, densifying the powder and forming cathode 12.

In certain embodiments, a layer of conductive material can be disposed between wall 18 and cathode 12. This layer may be disposed along the inner surface of wall 18, along the outer circumference of cathode 12 or both. Typically, this conductive layer is formed of a carbonaceous material. Such materials include LB1OOO (Timcal), Eccocoat 257 (W.R. Grace & Co.), Electrodag 109 (Acheson Industries, Inc.), Electrodag 112 (Acheson) and EB0005 (Acheson). Methods of applying the conductive layer are disclosed in, for example, Canadian Patent No: 1-,263;697, which is hereby incorporated by-reference.

When cathode 12 is disposed within battery 10 by a pressing process, providing a conductive layer between wall 18 and cathode 12 can decrease the amount of pressure used to place the pellet(s) within battery 10. Thus, the porosity of cathode 12 can be made relatively high without causing the pellet(s) to be crushed or form cracks. However, if the porosity of cathode 12 is too low, an insufficient amount of electrolyte can be dispersed within cathode 12, reducing the efficiency of battery 10. Therefore, cathode 12 should have a porosity of from about 21 % to about 28%, more preferably from about 25% to about 27%, and most preferably about 26%.

When preparing cathode 12, any of the conventional forms of manganese dioxide for cathodes can be used. Distributors of such manganese dioxide include Kerr McGee, Co., Broken Hill Proprietary, Chem Metals, Co., Tosoh, Delta Manganese, Mitsui Chemicals and JMC.

In certain embodiments, cathode 12 can have from about 8.9 grams of manganese dioxide to about 9.8 grams of manganese dioxide. In these embodiments, cathode 12 preferably includes from about 9.3 grams to about 9.8 grams of manganese dioxide, more preferably from about 9.4 grams to about 9.65 grams of manganese dioxide, and most preferably from about 9.45 grams to about 9.6 grams of manganese dioxide.

In other embodiments, cathode 12 preferably includes from about 4 grams to about 4.3 grams of manganese dioxide, more preferably from about 4.05 grams to about 4.25 grams of manganese dioxide, and most preferably from about 4.1 grams to about 4.2 grams of manganese dioxide.

In embodiments in which cathode 12 includes carbon particles, the carbon particles can be any of the standard carbon particles used in cathodes of batteries. The particle size is limited only by the dimensions of cathode 12. They can be synthetic or nonsynthetic, and they can be expanded or nonexpanded. In certain embodiments, the carbon particles are nonsynthetic, nonexpanded graphite particles. In these embodiments, the graphite particles preferably have an average particle size of less than about 20 microns, more preferably from about 2 microns to about 12 microns, and most preferably from about 5 microns to about 9 microns as measured using a Sympatec HELIOS analyzer. Nonsynthetic, nonexpanded graphite particles can be obtained from, for example, Brazilian Nacional de Grafite (Itapecirica, MG Brazil).

The amount of carbon particles within cathode 12 should be high enough to improve the conductivity of cathode 12 while having minimal impact on the energy capacity of battery 10. In some embodiments, cathode 12 includes from about 4 weight percent to about 10 weight percent carbon particles, more preferably from about 5 weight percent to about 9 weight percent carbon particles, and most preferably from about 6 weight percent to about 8 weight percent carbon particles. These weight percentages correspond to when the electrolytic solution is not dispersed within cathode 12.

In some embodiments, cathode 12 may further include a binder. Examples of binders for cathode 12 include polyethylene powders, polyacrlyamides, Portland cement and fluorocarbon resins, such as PVDF and PTFE. In certain embodiments, cathode 12 includes a polyethylene binder sold under the tradename coathylene HA-1681 (Hoescht).

When cathode 12 includes a binder, the binder preferably makes up less than about 1 weight percent of cathode 12, more preferably from about 0.1 weight percent to about 0.5 weight percent of cathode 12, and most preferably about 0.3 weight percent of cathode 12. These weight percentages correspond to when the electrolytic solution is not dispersed within cathode 12.

Cathode 12 can include other additives. Examples of these additives are disclosed in U.S. Patent No. 5,342,712, which is hereby incorporated by reference. In some embodiments, cathode 12 preferably includes from about 0.2 weight percent to about 2 weight percent TiO₂, more preferably about 0.8 weight percent TiO₂.

Anode 14 can be formed of any of the standard zinc materials used in battery anodes. Often, anode 14 is formed of a zinc gel that includes zinc metal particles, a gelling agent and minor amounts of additives, such as gassing inhibitors. In addition, a portion of the electrolytic solution is dispersed throughout anode 14.

If the porosity of anode 14 is too high, the amount of zinc within anode 14 is reduced which decreases the capacity of battery 10. However, if the porosity of anode 14 is too low, an insufficient amount of electrolyte can be dispersed within anode 14. Therefore, in certain embodiments, anode 14 preferably includes from about 2 grams of zinc particles to about 2.45 grams of zinc particles per cubic centimeter of anode, more preferably a porosity of from about 2.1 grams of zinc particles to about 2.35 grams of zinc particles per cubic centimeter of anode, and most preferably a porosity of from about 2.15 grams of zinc particles to about 2.3 grams of zinc particles per cubic centimeter of anode.

In some embodiments, anode 14 preferably includes from about 3.7 grams to about 4.25 grams of zinc particles, more preferably from about 3.8 grams to about 4.15 grams of zinc particles, and most preferably from about 3.9 grams to about 4.05 grams of zinc particles.

In other embodiments, anode 14 preferably includes from about 1.5 grams to about 1.9 grams of zinc particles, more preferably from about 1.55 grams to about 1.85 grams of zinc particles, and most preferably from about 1.65 grams to about 1.75 grams of zinc particles.

In certain embodiments, anode 14 preferably includes from about 64 weight percent to about 76 weight percent zinc particles, more preferably from about 66 weight percent to about 74 weight percent zinc particles, and most preferably from about 68 weight percent to about 72 weight percent zinc particles. These weight percentages correspond to when the electrolytic solution is dispersed throughout anode 14.

Gelling agents that can be used in anode 14 include polyacrylic acids, grafted starch materials, salts of polyacrylic acids, polyacrylates, carboxymethylcellulose or combinations thereof. Examples of such polyacrylic acids are Carbopol 940 (B.F. Goodrich) and Polygel 4P (3V), and an example of a grafted starch material is Water lock A221(Grain Processing Corporation, Muscatine, IA). An example of a salt of a polyacrylic acid is CL 15 (Allied Colloids). In some embodiments, anode 14 preferably includes at from about 0.2 weight percent to about 1 weight percent total gelling agent, more preferably from about 0.4 weight percent to about 0.7 weight percent total gelling agent, and most preferably from about 0.5 weight percent to about 0.6 weight percent total gelling agent. These weight percentages correspond to when the electrolytic solution is dispersed throughout anode 14.

Gassing inhibitors can be inorganic materials, such as bismuth, tin, lead and indium. Alternatively, gassing inhibitors can be organic compounds, such as phosphate esters, ionic surfactants or nonionic surfactants. Examples ionic surfactants are disclosed in, for example, U.S. Patent No. 4,777,100, which is hereby incorporated by reference.

Separator 16 can have any of the conventional designs for battery separators. In some embodiments, separator 16 is formed of two layers of nonwoven, nonmembrane material with one layer being disposed along a surface of the other. To minimize the volume of separator 16 while providing an efficient battery, each layer of nonwoven, non-membrane material can have a basis weight of about 54 grams per square meter, a thickness of about 5.4 mils when dry and a thickness of about 10 mils when wet. In these embodiments, the separator preferably does not include a layer of membrane material or a layer of adhesive between the nonwoven, non-membrane layers. Generally, the layers can be substantially devoid of fillers, such as inorganic particles.

In other embodiments, separator 16 includes an outer layer of cellophane with a layer of nonwoven material. Separator also includes an additional layer of nonwoven material. The cellophane layer can be adjacent cathode 12 or anode 14. Preferably, the nonwoven material contains from about 78 weight percent to about 82 weight percent PVA and from about 18 weight percent to about 22 weight percent rayon with a trace of surfactant. Such nonwoven materials are available from PDM under the tradename PA36.

The electrolytic solution dispersed throughout battery 10 can be any of the conventional electrolytic solutions used in batteries. Typically, the electrolytic solution is an aqueous hydroxide solution. Such aqueous hydroxide solutions include, for example, potassium hydroxide solutions and sodium hydroxide solutions. In some embodiments, the electrolytic solution is an aqueous potassium hydroxide solution including from about 33 weight percent to about 38 weight percent potassium hydroxide.

In certain embodiments, battery 10 preferably includes from about 3.4 grams to about 3.9 grams of electrolytic solution, more preferably from about 3.45 to about 3.65-grams of electrolytic solution, and most preferably from about 3.5 grams to about 3.6 grams of electrolytic solution.

In other embodiments, battery 10 preferably includes from about 1.6 grams to about 1.9 grams of electrolytic solution, more preferably from about 1.65 grams to about 1.85 grams of electrolytic solution, and most preferably from about 1.7 grams to about 1.8 grams of electrolytic solution.

The batteries can be AA or AAA batteries that demonstrate good results when tested according to the cc photo test, the 1 Watt continuous test, the half Watt continuous test, the pulsed test, the half Watt rm test and/or the quarter Watt rm test. These tests are described below.

Battery 10 can be a AA battery that exhibits excellent results when tested according to the cc photo test (described below). For example, when discharged to 1 Volt according to the cc photo test, the AA can give at least 150 pulses, at least about 175 pulses at least about 185 pulses, or at least about 200 pulses. When discharged to 0.8 Volts according to the cc photo test, the AA battery can give at least 350 pulses, at least about 375 pulses, at least about 385 pulses, or at least about 400 pulses.

Battery 10 can be a AA battery that exhibits excellent results when tested according to the 1 Watt continuous test (described below). For example, when discharged to 1 Volt according to the 1 Watt continuous test, the AA battery can give at least about 0.6 hours, at least about 0.65 hours, at least about 0.7 hours, or at least about 0.75 hours pulses. When discharged to 0.8 Volts according to the 1 Watt continuous test, the AA battery can give at least 0.95 hours, at least about 1 hour, at least about 1.05 hours, or at least about 1.1 hours.

Battery 10 can be a AA battery that exhibits excellent results when tested according to the pulsed test (described below). For example, when discharged to 1 Volt according to the pulsed test, the AA battery can give at least about 1.6 hours, at least about 1.75 hours, at least about 2 hours, or at least about 2.15 hours pulses. When discharged to 0.8 Volts according to the pulsed test, the AA battery can give at least 2.75 hours, at least about 3 hours, at least about 3.25 hours, or at least about 3.3 hours.

Battery 10 can be a AA battery that offers excellent performance according to the half Watt rm test (described below). For example, when discharged to 1.1 Volts according to the half Watt rm test, the AA battery can give at least about 1.5 hours, at least about 2 hours, at least about 2.5 hours or at least about 2.65 hours. When discharged to 0.9 Volts according to the half Watt rm test, the AA battery can give at least 2.9 hours, at least about 3 hours, at least about 3.25 hours or at least about 3.4 hours.

Battery 10 can be a AAA battery that offers excellent performance according to the half Watt continuous test (described below). For example, when discharged to 1 Volt according to the half Watt continuous test, the AAA battery can give at least about 0.65 hours, at least about 0.7 hours, at least about 0.75 hours or at least about 0.8 hours. When discharged to 0.9 Volts according to the half Watt continuous test, the AAA battery can give at least 0.9 hours, at least about 0.95 hours, at least about 1-hour or at least about 1.05 hours.

Battery 10 can be a AAA battery that offers excellent performance according to the pulsed test (described below). For example, when discharged to 1 Volt according to the pulsed test, the AAA battery can give at least about 0.35 hours, at least about 0.4 hours, at least about 0.45 hours or at least about 0.5 hours. When discharged to 0.9 Volts according to the pulsed test, the AAA battery can give at least 0.65 hours, at least about 0.7 hours, at least about 0.75 hours or at least about 0.8 hours.

Battery 10 can be a AAA battery that offers excellent performance according to the half Watt rm test (described below). For example, when discharged to 1.1 Volts according to the half Watt rm test, the AAA battery can give at least about 0.4 hours, at least about 0.45 hours, at least about 0.5 hours or at least about 0.55 hours. When discharged to 0.9 Volts according to the half Watt rm test, the AAA battery can give at least 0.9 hours, at least about 0.95 hours, at least about 1 hour or at least about 1.05 hours.

Battery 10 can be a AAA battery that offers excellent performance according to the quarter Watt rm test (described below). For example, when discharged to 1.1 Volts according to the quarter Watt rm test, the AAA battery can give at least about 2 hours, at least about 2.1 hours, at least about 2.2 hours or at least about 2.3 hours. When discharged to 0.9 Volts according to the quarter Watt rm test, the AAA battery can give at least 3.1 hours, at least about 3.25 hours, at least about 3.4 hours or at least about 3.5 hours.

### Example I

AA batteries were prepared with the following components. The cathode included about 9.487 grams of manganese dioxide (Kerr-McGee, Co.), about 0.806 grams of nonsynthetic, nonexpanded graphite having an average particle size of about 7 microns (Brazilian Nacional de Grafite) and about 0.3 weight percent of coathylene HA-1681. The anode included about 3.976 grams of zinc particles, about 50 ppm surfactant (RM 510, Rhone Poulenc) relative to zinc, and about 0.5 weight percent total gelling agent (Carbopol 940 and A221). The porosity of the cathode was about 26%, and the porosity of the anode was about 2.173 grams of zinc per cubic centimeter of anode. The separator was a two-layer structure with each layer formed of a nonwoven material including about 57 weight percent PVA fibers (about 0.5 denier at 6 millimeters), about 30 weight percent rayon fibers (about 1.5 denier at 6 millimeters) and about 13 weight percent PVA binder. Each layer was about 5.4 mils thick when dry and about 10 mils thick when wet. Each layer had a basis weight of about 54 grams per square meter. The separator did not include an adhesive, and the layers were substantially devoid of any filler. The battery also included about 3.598 grams of an aqueous potassium hydroxide (about 35.5 weight percent potassium hydroxide) solution. A thin coating of EB005 (Acheson) was disposed between the outer wall of the battery and the outer periphery of the cathode.

The AA batteries were stored at a temperature of from about 20.1°C to about 22.1°C for five days. The AA batteries were then stored according to the following procedure.

Each battery is visually examined for leakage or material damage and identified such that battery identification can be maintained throughout the test program. The batteries are oriented on their sides in holding trays such that the batteries are not in physical contact with each other. The holding trays are made to be resistant to heat and electrolytes. The trays are stored for 1 day at ambient conditions, after which the trays are placed in a preheated chamber. The trays are spaced so that there is at least about 5 cm (2 inches) of space between the chamber walk, and the tray above, below, or adjacent to-each tray. The following 24 hour test sequence, shown in Table I, is repeated for 14 days.

The trays are removed from the chamber and each battery is visually examined for leakage and material damage.

**Table I**

| Cycle Number | Time (Hrs.) | Temperature (± 2°C) |
|---|---|---|
| 1 | 6.0 | Ramp from 28 to 25 |
| 2 | 4.5 | Ramp from 25 to 34 |
| 3 | 2.0 | Ramp from 34 to 43 |
| 4 | 1.0 | Ramp from 43 to 48 |
| 5 | 1.0 | Ramp from 48 to 55 |
| 6 | 1.0 | Ramp from 55 to 48 |
| 7 | 1.0 | Ramp from 48 to 43 |
| 8 | 3.0 | Ramp from 43 to 32 |
| 9 | 4.5 24.0 (1 Day) | Ramp from 32 to 28 |

The following tests were subsequently performed on individual AA batteries. Each test was conducted at a temperature of from about 20.1°C to about 22.1°C.

A AA battery was discharged from an open circuit voltage of about 1.6 Volts under constant current conditions of ten seconds per minute for one hour per day ("the cc photo test"). The AA battery reached 1 Volt after 192 pulses, and the AA battery reached 0.8 Volts after 395 pulses.

A AA battery was continuously discharged from an open circuit voltage of about 1.6 Volts at 1 Watt ("the 1 Watt continuous test"). The AA battery reached 1 Volt after about 0.75 hours, and the AA battery reached 0.8 Volts after about 1.00 hours.

A AA battery was continuously discharged from an open circuit voltage of about 1.6 Volts at a rate that alternated between 1 Watt (3 second pulses) and 0.1 Watt (7 second pulses) ("the pulsed test"). The AA battery reached 1 Volt after about 2.16 hours, and the AA battery reached 0.8 Volts after about 3.72 hours.

A AA battery was discharged from an open circuit voltage-of about 1.6 Volts at 0.5 Watts for 15 minutes per hour ("the half Watt rm test"). The AA battery reached 1.1 Volts after about 1.87 hours, and the AA battery reached 0.9 Volts after about 3.34 hours.

### Example II

A AAA battery was prepared. The cathode 12 included about 4.155 grams of manganese dioxide (Kerr McGee, Co.), about 0.353 grams of nonsynthetic, nonexpanded graphite having an average particle size of about 7 microns (Brazilian Nacional de Grafite) and about 0.3 weight percent of coathylene HA-1681. The anode 14 included about 1.668 grams of zinc particles, about 50 ppm surfactant (RM 510, Rhone Poulenc) relative to zinc, and about 0.5 weight percent total gelling agent (Carbopol 940 and A221). The porosity of the cathode was about 26%, and the porosity of the anode was about 2.266 grams of zinc per cubic centimeter of anode 14. The separator included layers of nonwoven material. The separator was a two-layer structure with each layer formed of a nonwoven material including about 57 weight percent PVA fibers (about 0.5 denier at 6 millimeters), about 30 weight percent cellulose fibers (about 1.5 denier at 6 millimeters) and about 13 weight percent PVA binder. Each layer was about 5.4 mils thick when dry and about 10 mils thick when wet. Each layer had a basis weight of about 54 grams per square meter. The separator did not include an adhesive, and the layers were substantially devoid of a filler. The battery also included about 1.71 grams of an aqueous potassium hydroxide (about 35.5 weight percent) solution. A thin coating of EB005 (Acheson) was disposed between the outer wall of the battery and the outer periphery of the cathode.

The AAA batteries were stored as described in Example I. Each AAA battery was discharged from an open circuit voltage of about 1.6 Volts, and the tests were conducted within the temperature range described in Example I.

A AAA battery was continuously discharged from an open circuit voltage of about 1.6 Volts at one half Watt ("the half Watt continuous test"). The AAA battery reached 1 Volt after about 0.76 hours, and the AA battery reached 0.8 Volts after about 0.96 hours.

With the pulsed test, a AAA battery took about 0.55 hours to reach 1 Volt, and about 0.84 hours to reach 0.8 Volts.

With the half Watt rm test, a AAA battery took about 0.57 hours to reach 1 Volt, and about 1.08 hours to reach 0.8 Volts.

A AAA battery was discharged from an open circuit voltage of about 1.6 Volts at 0.25 Watts for 15 minutes per hour ("the quarter Watt rm test"). The AAA battery reached 1.1 Volts after about 2.4 hours, and the AAA battery reached 0.9 Volts after about 3.65 hours.

### Example III

AA batteries were prepared with the following components. The cathode included about 9.11 grams of manganese dioxide (40:60 weight mixture of Delta:Tosoh), about 0.810 grams of nonsynthetic, nonexpanded graphite having an average particle size of about 7 microns (Brazilian Nacional de Grafite) and about 0.8 weight percent of titanium dioxide (Kronos). The anode included about 3.89 grams of zinc particles, about 0.88 weight percent total gelling agent (3 V and CL 15), and about 50 ppm of surfactant (RM 510, Rhone Poulenc). The porosity of the cathode was about 23%, and the porosity of the anode was about 2.173 grams of zinc per cubic centimeter of anode. The separator included a layer of nonwoven material (PA 36 A, PDM) a layer of PA36C and a layer of cellophane (1 mil. thick). The cellophane was adjacent to the cathode, and the nonwoven PA36A layer was adjacent to the anode. The battery also included about 3.62 grams of aqueous potassium hydroxide (about 35.5 weight percent potassium hydroxide) solution. A thin coating of EB 005 (Acheson) was disposed between the outer wall of the battery and the outer periphery of the cathode.

The AA batteries were stored at a temperature of from about 20.1°C to about 22.1 °C for about five days according to the protocol described in Example I. The following tests were subsequently performed on individual AA batteries. Each test was conducted at a temperature of from about 20.1 °C to about 22.1 °C.

The AA battery was discharged according to the cc photo test. The AA battery reached one volt after 180 pulses, and the AA battery reached 0.8 volts after 347 pulses.

A AA battery was discharged according to the one Watt continuance test. The AA battery reached 1 volt after about 0.57 hours, and the AA battery reached 0.8 volts after about 0.80 hours.

A AA battery was continuously discharged from an open circuit voltage according to the pulsed test. The AA battery reached 1 volt after about 1.76 hours, and the AA battery reached 0.8 volts after about 3.11 hours.

A AA battery was discharged according to the half Watt rm test. The AA battery reached 1.1 volts after about 1.66 hours, and the AA battery reached 0.9 volts after about 3.05 hours.

Other embodiments are within the claims.

## Claims

1. An electrochemical cell, comprising:
a cathode including manganese dioxide and optionally carbon particles;
an anode including zinc particles; and
a separator disposed between the cathode and the anode, wherein the cathode has a porosity of from 24% to 28% and the anode has a porosity of from 2.15 grams of zinc particles to 2.3 grams of zinc particles per cubic centimeter of anode volume.

2. An electrochemical cell according to claim 1, wherein the cathode has a porosity of from 25% to 27%.

3. An electrochemical cell according to claim 2, wherein the cathode has a porosity of about 26%.

4. An electrochemical cell according to any one of the preceding claims; wherein the carbon particles are nonsynthetic, nonexpanded graphite particles having an average particle size of less than 20 microns.

5. An electrochemical cell according to any one of the preceding claims wherein the electrochemical cell is an alkaline battery.

6. An electrochemical cell according to any one of the preceding claims wherein the electrochemical cell is selected from the group consisting of AA batteries, AAA batteries, AAAA batteries, C batteries and D batteries.

7. An electrochemical cell according to any one of the preceding claims wherein the separator comprises a nonwoven, non-membrane material and a second nonwoven, non-membrane material disposed along a surface of the first material.

8. An electrochemical cell according to any one of the preceding claims, further comprising an electrolytic solution, wherein the cathode includes manganese dioxide and a weight ratio of manganese dioxide of the electrolytic solution is from 2.2. to 2.9.

9. An electrochemical cell according to any one of the preceding claims, further comprising an electrolytic solution, wherein a weight ratio of zinc particles to the electrolytic solution is from 0.9 to 1.25.

## Patentansprüche

1. Elektrochemische Zelle, die folgendes umfasst:
eine Kathode, die Mangandioxid und optional Kohlenstoffteilchen aufweist;
eine Anode, die Zinkteilchen aufweist; und
einen Separator, der zwischen der Kathode und der Anode angeordnet ist, wobei die Kathode eine Porosität zwischen 24% und 28% aufweist, und wobei die Anode eine Porosität zwischen 2,15 Gramm Zinkteilchen bis 2,3 Gramm Zinkteilchen je Kubikzentimeter des Anodenvolumens aufweist.

2. Elektrochemische Zelle nach Anspruch 1, wobei die Kathode eine Porosität zwischen 25% und 27% aufweist.

3. Elektrochemische Zelle nach Anspruch 2, wobei die Kathode eine Porosität von etwa 26% aufweist.

4. Elektrochemische Zelle nach einem der vorstehenden Ansprüche, wobei die Kohlenstoffteilchen nicht synthetische, nicht erweiterte Teilchen mit einer durchschnittlichen Teilchengröße von weniger als 20 Mikron darstellen.

5. Elektrochemische Zelle nach einem der vorstehenden Ansprüche, wobei es sich bei der elektrochemischen Zelle um eine Alkalibatterie handelt.

6. Elektrochemische Zelle nach einem der vorstehenden Ansprüche, wobei die elektrochemische Zelle aus der Gruppe ausgewählt wird, welche AA-Batterien, AAA-Batterien, AAAA-Batterien, C-Batterien und D-Batterien umfasst.

7. Elektrochemische Zelle nach einem der vorstehenden Ansprüche, wobei der Separator ein nichtgewebtes, Nichtmembran-Material und ein zweites nichtgewebtes Nichtmembran-Material umfasst, das entlang einer Oberfläche des ersten Materials angeordnet ist.

8. Elektrochemische Zelle nach einem der vorstehenden Ansprüche, wobei diese ferner eine Elektrolytlösung umfasst, wobei die Kathode Mangandioxid aufweist, und mit einem Gewichtsverhältnis von Mangandioxid der Elektrolytlösung zwischen 2,2 bis 2,9.

9. Elektrochemische Zelle nach einem der vorstehenden Ansprüche, wobei diese ferner eine Elektrolytlösung umfasst, mit einem Gewichtsverhältnis der Zinkteilchen zu der Elektrolytlösung von 0,9 bis 1,25.

## Revendications

1. Cellule électrochimique, comprenant :
une cathode comprenant du dioxyde de manganèse et optionnellement des particules de carbone ;
une anode comprenant des particules de zinc ; et
un séparateur disposé entre la cathode et l'anode, la cathode ayant une porosité comprise entre 24 % et 28 % et l'anode ayant une porosité comprise entre 2,15 grammes de particules de zinc et 2,3 grammes de particules de zinc par centimètre cube de volume d'anode.

2. Cellule électrochimique selon la revendication 1, dans laquelle la cathode a une porosité comprise entre 25 % et 27 %.

3. Cellule électrochimique selon la revendication 2, dans laquelle la cathode a une porosité d'environ 26 %.

4. Cellule électrochimique selon l'une quelconque des revendications précédentes, dans laquelle les particules de carbone sont non synthétiques, les particules de graphite non développé ayant une taille de particule moyenne inférieure à 20 microns.

5. Cellule électrochimique selon l'une quelconque des revendications précédentes, dans laquelle la cellule électrochimique est une pile alcaline.

6. Cellule électrochimique selon l'une quelconque des revendications précédentes, dans laquelle la cellule électrochimique est sélectionnée dans le groupe constitué de piles AA, de piles AAA, de piles AAAA, de piles C et de piles D.

7. Cellule électrochimique selon l'une quelconque des revendications précédentes, dans laquelle le séparateur comprend un matériau non tissé sans membrane et un deuxième matériau non tissé sans membrane disposé le long d'une surface du premier matériau.

8. Cellule électrochimique selon l'une quelconque des revendications précédentes, comprenant en outre une solution électrolytique, dans laquelle la cathode comprend du dioxyde de manganèse et un rapport pondéral du dioxyde de manganèse sur la solution électrolytique est compris entre 2,2 et 2,9.

9. Cellule électrochimique selon l'une quelconque des revendications précédentes, comprenant en outre une solution électrolytique, dans laquelle le rapport pondéral des particules de zinc sur la solution électrolytique est compris entre 0,9 et 1,25.
